# EUROPÄISCHE PATENTSCHRIFT

(11) **EP 0 346 761 B1**
(45) Veröffentlichungstag und Bekanntmachung des Hinweises auf die Patenterteilung: **21.12.1994**
(21) Anmeldenummer: 89110354.1
(22) Anmeldetag: 08.06.1989
(51) Int. Cl.: C08G 63/64, C08G 63/79, C08G 63/87, C08G 64/20

(54) **Verfahren zur Herstellung von aromatischen Polycarbonaten**
Process for the preparation of aromatic polycarbonates
Procédé pour la préparation de polycarbonates aromatiques

(30) Priorität: 11.06.1988 DE 3819943
(43) Veröffentlichungstag der Anmeldung: 20.12.1989
(73) Patentinhaber: BAYER AG, 51368 Leverkusen (DE)
(72) Erfinder: Ebert, Wolfgang, Dr., D-4150 Krefeld (DE); Meyer, Rolf-Volker, Dr., D-4150 Krefeld (DE); Dhein, Rolf, Dr., D-4150 Krefeld (DE); Oels, Udo, Dr., D-4150 Krefeld (DE)

(56) Entgegenhaltungen:
- EP-A- 0 008 492
- EP-A- 0 024 286
- DE-A- 1 445 211
- DE-A- 2 122 170
- US-A- 3 376 261
- POLYMER JOURNAL, Band 13, Nr. 10, 1981, Seiten 989-911; N. OGATA et al.: "Synthesis of polyester by direct polycondensation with triphenylphosphine"
- H. Schnell,Chemistry and Physics of Polycarbonates, Interscience, New York, 1964, Seite 40

## Beschreibung

Gegenstand der vorliegenden Erfindung ist ein Verfahren zur Herstellung von aromatischen Polycarbonaten nach dem bekannten Zweiphasengrenzflachenverfahren in Gegenwart von wäßriger und organischer Phase durch Umsetzung von Diphenolen mit Phosgen in Gegenwart von Katalysatoren, gegebenenfalls unter Mitverwendung von monofunktionellen Kettenabbrechern und gegebenenfalls unter Mitverwendung von drei funktionellen oder mehr als dreifunktionellen Verzweigern, gegebenenfalls in Anwesenheit von Reduktionsmitteln, wobei daß als organische Phase eine Mischung aus 5 bis 95 Gew.-%, vorzugsweise 30 bis 90 Gew.-%, besonders bevorzugt 50 bis 85 Gew.-% an aromatischen Kohlenwasserstoffen mit 95 bis 5 Gew.-%, vorzugsweise 70 bis 10 Gew.-% und insbesondere 50 bis 15 Gew.-% an Alkanen und/oder an Cycloalkanen eingesetzt wird, dadurch gekennzeichnet daß als Katalysatoren Phosphine oder Phosphinoxide verwendet werden.

Die Herstellung von thermoplastischen Polycarbonaten nach dem Zweiphasengrenzflachenverfahren ist bekannt (siehe beispielsweise US-Patente 3 028 365 und 3 275 601). Hierbei können als organische Phase Benzin, Ligroin, Cyclohexan, Methylcyclohexan, Benzol, Toluol, Xylole u. a. eingesetzt werden (siehe beispielsweise US-PS 3 028 365, Spalte 2, Zeilen 45-48 in Verbindung mit Zeilen 32-35 von Spalte 2 und die Beispiele).

Die erfindungsgemäß einzusetzenden Mischungen von aromatischen Kohlenwasserstoffen mit Alkanen bzw. Cycloalkanen sind darin nicht beschrieben.

In der US-Patentschrift Nr. 3 112 292, die auf die Herstellung von linearen, kristallisierten Polycarbonaten gerichtet ist, kann die Herstellung nach dem Phasengrenzflächenverfahren zwar in Gegenwart von aromatischen Kohlenwasserstoffen wie Benzol, Toluol, Xylol (Spalte 2, Zeile 46) erfolgen, wohingegen aliphatische Kohlenwasserstoffe und cycloaliphatische Kohlenwasserstoffe zur Förderung der Kristallisation des Polycarbonats aus seinen Lösungen eingesetzt werden können (Spalte 3, Zeilen 18-24).

Gemäß der japanischen Patentpublikation Nr. 21 472/66 besteht die Möglichkeit, das Polycarbonat sofort in fester Form herzustellen, wenn man die Umsetzung mit Phosgen in Gegenwart von gegebenenfalls chlorierten aromatischen Kohlenwasserstoffen, oberflächenaktiven Stoffen und wäßriger Alkalilösung durchführt.

Gemäß US-Patent 3 530 094 können aromatische, aliphatische und cycloaliphatische Kohlenwasserstoffe zur Fällung von Polycarbonat aus seinen Lösungen eingesetzt werden (Spalte 6, Zeilen 60 ff), während Benzol und Toluol auch die organische Phase bei der Polycarbonatherstellung nach dem Phasengrenzflächenverfahren bilden können (Spalte 5, Zeilen 28-33).

Gemäß DE-OS 2 410 716 wird Chlorbenzol als Lösungsmittel bei der Polycarbonatherstellung empfohlen, wobei jedoch Temperaturen > 70°C eingehalten werden müssen.

Schließlich ist aus der DE-OS 3 429 960 bekannt, daß man Polycarbonatlösungen mit Dämpfen von Benzol oder Alkylbenzolen behandelt und somit eine schonende Isolierung der Polycarbonate ermöglicht. Daraus ergibt sich, daß Benzol oder Alkylbenzole selbst als organische Phase bei der Phasengrenzflächenpolykondensation in der Praxis sich als ungeeignet herausgestellt haben.

Somit ergab sich, daß in der Praxis das Phasengrenzflächenverfahren in der Regel unter Verwendung der chlorhaltigen Verbindungen als Lösungsmittel durchgeführt wird, was jedoch für die Isolierung der thermoplastischen Polycarbonate noch gewisse Nachteile in sich birgt, so daS dafür jeweils spezielle, d. h. aufwendige Maßnahmen erforderlich sind (siehe dazu beispielsweise DE-OS 34 29 960).

Aus der US-Patentschrift 3 376 261 ist ein Verfahren zur Herstellung von Polycarbonaten bekannt, das eine wäßrig alkalische und eine organische Phase einbezieht, wobei jedoch die Anwesenheit eines Tensids essentiell ist (Anspruch 1 von US-PS 3 376 261).

Aus "Ogata, N. et al, Polymer J. 13,989 - 991(1981) ist die Herstellung von Polyestern mit Triphenylphosphinen bekannt. Hierbei werden jedoch halogenhaltige Kohlenwasserstoffe als Reaktionsmedium eingesetzt. Das Verfahren der vorliegenden Erfindung vermeidet jedoch halogenhaltige Kohlenwasserstoffe als Reaktionsmedium.

Die erfindungsgemäß einzusetzenden aromatischen Kohlenwasserstoffe haben vorzugsweise 7 bis 15 C-Atome und entsprechen insbesondere der Formel (I). 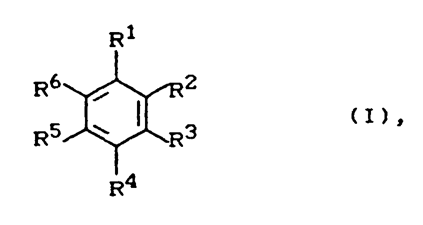
worin
- R¹-R⁶: unabhängig voneinander Wasserstoff oder gegebenenfalls verzweigtes C₁-C₁₉-Alkyl, Phenyl oder C₇-C₉-Alkaryl/Aralkyl sind, wobei immer mindestens ein Rest R¹-R⁶ kein Wasserstoff ist; ferner können zwei ortho-ständige Reste R¹-R⁶ einen gegebenenfalls substituierten aromatischen oder cycloaliphatischen annelierten Ring bilden.

Beispiele für aromatische Kohlenwasserstoffe sind Toluol, Ethylbenzol, 1,2-Dimethylbenzol, 1,3-Dimethylbenzol, 1,4-Dimethylbenzol, 2-, 3- und 4-Ethyltoluol, Cumol, n-Propylbenzol, 1,2,3-Trimethylbenzol, 1,2,4-Trimethylbenzol, 1,3,5-Trimethylbenzol, i/n/sek./ tert.-Butylbenzol, o/m/p-Cymol, 1,2-, 1,3- und 1,4-Diethylbenzol, 2-/3-/4-Methyl-n/i-propylbenzol, 1,2,3,4-Tetramethylbenzol, 1,2,3,5-Tetramethylbenzol, 1,2,4,5-Tetramethylbenzol, n-Amylbenzol, Isoamylbenzol, Pentamethylbenzol, 1-/2-Methylnaphthalin, 1-/2-Ethylnaphthalin, 1,2-/1,4-/1,6-/1,7-Dimethylnaphthalin, Hexamethylbenzol, Hexylbenzol, 1,3,5-Triethylbenzol, 1,2,5-Trimethylnaphthalin, 1,2,7-Trimethylnaphthalin und 1,3,5-Triisopropylbenzol, Tetralin, Ditolyl, Diphenyl. Bevorzugt sind: Toluol, Ethylbenzol, o/m/p-Xylol, 1,3,5-Trimethylbenzol, 1,3,5-Triisopropylbenzol.

Die erfindungsgemäß einzusetzenden gegebenenfalls verzweigten Alkane haben 5 bis 20 C-Atome vorzugsweise 5-12 C-Atome.

Beispiele für Alkane sind n/i-Pentan, n/i-Hexan, n/i-Heptan, n/i-Octan sowie deren Gemische wie sie auch z.B. bei der Destillation von Erdölfraktion anfallen.

Die erfindungsgemäß einzusetzende Cycloalkane haben 5 bis 20 C-Atome und vorzugsweise 5-12 C-Atome.

Beispiele für Cycloalkane sind Cyclopentan, Cyclohexan, Ethylcyclopentan, Methylcyclohexan, Ethylcyclohexan, Tetralin und Dekalin, Cyclooctan, Cyclododecan.

Es können beliebige Kombinationen der genannten aromatischen Kohlenwasserstoffe mit den genannten Alkanen und/oder mit den Cycloalkanen verwendet werden. Geeignete Kombinationen sind beispielsweise

Toluol/Pentan, Toluol/Hexan, Toluol/Heptan, Toluol/i/n-Octan, Toluol/Cyclopentan, Toluol/Cyclohexan, Toluol/Petrolether, Toluol/Benzin, Xylol/Pentan, Xylol/Hexan, Xylol/Heptan, Xylol/i/n-Octan, Xylol/Cyclopentan, Xylol/Cyclohexan, Xylol/Petrolether, Xylol/Benzin, Mesitylen/Pentan, Mesitylen/Hexan und Mesitylen/i/n-Octan.

Bevorzugte Kombinationen sind beispielsweise Toluol/Pentan, Toluol/i-Octan, Toluol/Petrolether, Toluol/Benzin, Toluol/Cyclohexan, Xylol/i-Octan, Xylol/Petrolether, Xylol/Benzin und Xylol/Cyclohexan.

Die Menge an organischer Phase zur Durchführung des erfindungsgemäßen Verfahrens beträgt 300 ml bis 8000 ml pro Mol Diphenol, vorzugsweise 350 ml bis 5000 ml pro Mol Diphenol.

Die Reaktionstemperaturen für das Phasengrenzflächenverfahren liegen zwischen 0 C und 100 °C, insbesondere zwischen 5°C und 50°C wobei selbstverständlich der Siedepunkt des Reaktionsgemisches berücksichtigt werden muß und gegebenenfalls mit leichten Überdruck gearbeitet werden muß.

Die Reaktionszeiten für das Phasengrenzflachenverfahren liegen einschließlich Nachkondensationszeit zwischen 15 Min und 150 Min.

Die erfindungsgemäße Umsetzung erfolgt bei Drücken von 1 atm, bis 6 atm, vorzugsweise bei Normaldruck.

Der pH-Wert der wäßrigen Phase des erfindungsgemäßen Zweiphasengrenzflächenverfahrens liegt zwischen 9 und 14, vorzugsweise zwischen 10 und 14. Die Menge an wäßriger Phase muß so bemessen sein, daß unter den gewählten Rührbedingungen Emulsionen erhalten werden.

Geeignete basische Materialien für die wäßrige Phase sind die üblichen, wie beispielsweise wäßriges Alkali oder wäßriges Erdalkali vorzugsweise wäßriges Alkali und insbesondere wäßrige NaOH oder wäßrige KOH.

Die in dem erfindungsgemäßen Verfahren einsetzbaren Diphenole sind alle die, die unter den Reaktionsbedingungen des erfindungsgemäßen Phasengrenzflächenverfahrens keine reaktiven Substituenten haben, also außer den beiden phenolischen OH-Gruppen allenfalls nur unter den Reaktionsbedingungen des erfindungsgemäßen Phasengrenzflächenverfahrens inerte Substituenten wie beispielsweise aromatisch gebundenes Chlor, Brom oder Alkyl.

Die Diphenole haben vorzugsweise 6 bis 21 C-Atome.

Beispiele für Diphenole sind Dihydroxydiphenyle, Bis-(hydroxyphenyl)-alkane, Bis-(hydroxyphenyl)-cycloalkane, Bis-(hydroxyphenyl)-sulfide, Bis-(hydroxyphenyl)-ether, Bis-(hydroxyphenyl)-ketone, Bis-(hydroxyphenyl)-sulfoxide, Bis-(hydroxyphenyl)-sulfone und α,α'-Bis-(hydroxyphenyl)-diisopropylbenzole, 4,4'-Dihydroxydiphenyl, 4,4'-Dihydroxy-3,3',5,5'-tetramethyldiphenyl, 4,4'-Dihydroxy-3,3',5,5'-tetrachlordiphenyl, Bis-(4-hydroxyphenyl)-methan, Bis-(4-hydroxy-3,5-dimethylphenyl)-methan, Bis-(4-hydroxy-3,5-dichlorphenyl)-methan, 2,2-Bis-(4-hydroxyphenyl)-propan, 2,2-Bis-(4-hydroxy-3,5-dimethylphenyl)-propan, 2,2-Bis-(4-hydroxy-3,5-dichlorphenyl)-propan, 1,1-Bis-(4-hydroxyphenyl)-cyclohexan, 1,1-Bis-(4-hydroxy-3,5-dimethylphenyl)-cyclohexan, 1,1-Bis-(4-hydroxy-3,5-dichlorphenyl)-cyclohexan, Bis-(4-hydroxyphenyl)-sulfon, Bis-(4-hydroxy-3,5-dichlorphenyl)-sulfon, Bis-(4-hydroxy-3,5-dimethylphenyl)-sulfon, Bis-(4-hydroxyphenyl)-sulfid, Bis-(4-hydroxy-3,5-dimethylphenyl)-sulfid, Bis-(4-hydroxy-3,5-dichlorphenyl)-sulfid, Bis-(4-hydroxyphenyl)-oxid, Bis-(4-hydroxy-3,5-dimethylphenyl)-oxid, Bis-(4-hydroxyphenyl)-keton und Bis-(4-hydroxy-3,5-dimethylphenyl)-keton.

Diese Diphenole sind entweder literaturbekannt oder nach literaturbekannten Verfahren erhältlich.

Bevorzugte Diphenole sind
2,2-Bis-(4-hydroxyphenyl)propan,
1,1-Bis-(4-hydroxyphenyl)cyclohexan,
Bis-(4-hydroxphenyl)sulfid,
Bis-(4-hydroxyphenyl)sulfon und
2,2-Bis-(4-hydroxy-3,5-dimethylphenyl)propan.

Die Diphenole können sowohl einzeln, als auch im Gemisch von zwei oder mehr Diphenolen eingesetzt werden.

Erfindungsgemäß einsetzbare Kettenabbrecher sind Monophenole und Chloride von einbasischen Säuren, insbesondere von Monocarbonsäuren.

Geeignete Monophenole sind Phenol, p-tert.-Butylphenol, o-Kresol, m-Kresol, p-Kresol, 2-/3-/4-Ethylphenol, Cumol, 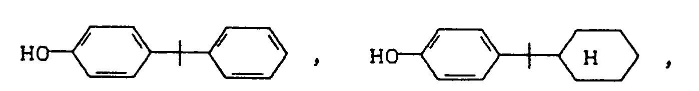
p-Nonylphenol, p-Isooctylphenol, p-Chlorphenol, p-Bromphenol, β-Naphthol, α-Naphthol.

Als Säurechloride können z. B. Acetylchlorid, Benzoylchlorid, Naphthoesäurechlorid oder die Chlorformiate der vorstehend genannten Phenole verwendet werden.

Die Mengen an Kettenabbrechern liegen zwischen 0,2 - 10,0 Mol %, vorzugsweise 1,0 - 6,5 Mol %, bezogen auf die jeweils eingesetzten Mole Diphenole.

Es können sowohl die Monophenole allein, als auch die Säurechloride allein, aber auch Monophenole und Säurechloride gemeinsam, aber dann sukzessive eingesetzt werden.

Für das erfindungsgemäße Verfahren geeignete Verzweiger sind beispielsweise Polyhydroxyverbindungen mit drei oder mehr als drei phenolischen Hydroxygruppen.

Als Verzweigerkomponenten kommen die in den deutschen Offenlegungsschriften 1 570 533, 15 95 762, 21 16 974, 21 13 347 und 25 090 924 der britischen Patentschrift 1 079 821 und der US-Patentschrift 3 544 514 beschriebenen Verbindungen in Frage.

Einige der verwendbaren Verbindungen mit drei oder mehr als drei phenolischen Hydroxygruppen sind beispielsweise Phloroglucin, 4,6-Dimethyl-2,4,6-tri-(4-hydroxyphenyl)-hepten-2, 4,6-Dimethyl-2,4,6-tri-(4-hydroxyphenyl)-heptan, 1,3,5-Tri-(4-hydroxyphenyl)-benzol, 1,1,1-Tri-(4-hydroxyphenyl)-ethan, Tri-(4-hydroxyphenyl)-phenylmethan, 2,2-Bis-[4,4-bis-(4-hydroxyphenyl)-cyclohexyl]-propan, 2,4-Bis-(hydroxyphenyl-isopropyl)-phenol, 2,6-Bis-(2-hydroxy-5'-methyl-benzyl)-4-methylphenol, 2-(4-Hydroxyphenyl)-2-(2,4-dihydroxyphenyl)-propan und 1,4-Bis-(4,4''-dihydroxytriphenyl-methyl)-benzol. Einige der sonstigen dreifunktionellen Verbindungen sind Trimesinsäuretrichlorid, Cyanurchlorid, 3,3-Bis-(4-hydroxyphenyl)-2-oxo-2,3-dihydroindol und 3,3-Bis-(4-hydroxy-3-methylphenyl)-2-oxo-2,3-dihydroindol.

Die Menge an jeweils einsetzbarem Verzweiger beträgt zwischen 0,05 und 3,0 Mol %, vorzugsweise zwischen 0,1 und 1,5 Mol %, bezogen auf jeweils eingesetzte Diphenole.

Die Menge an erfindungsgemäß einzusetzenden Phosphinen und/oder Phosphinoxiden als Katalysatoren variiert je nach Art der eingesetzten Diphenole zwischen 0,2 -10 Mol %, bei Einsatz von gegebenenfalls tetrasubstituierten Diphenolen zwischen 0,5 - 15 Mol %, bezogen jeweils auf die Gesamtmenge an eingesetzten Diphenolen.

Es können einzelne Katalysatoren als auch Gemische von verschiedenen Katalysatoren eingesetzt werden.

Für das erfindungsgemäße Verfahren geeignete Phosphine sind solche der Formel (V)

Z₂ - P - Z¹ (V)

worin
Z ein C₆-C₁₄-Aryl-Rest ist, welcher substituiert oder unsubstituiert sein kann, ein C₇-C₁₅-Alkaryl-Rest ist, welcher substituiert oder unsubstituiert sein kann, ein C₇-C₁₅-Aralkyl-Rest ist, welcher substituiert oder unsubstituiert sein kann, und worin Z¹ die Bedeutung von Z hat und außerdem ein C₁-C₁₈-Alkyl ist, welches substituiert oder unsubstituiert sein kann.

Geeignete Phosphine sind beispielsweise Triphenylphosphin, Diphenylbutylphosphin, Diphenyloctadecylphosphin, Diphenylbenzylphosphin, Tris-p-tolylphosphin, Tris-(p-chlorphenyl)-phosphin und Phenylnaphthylbenzylphosphin.

Für das erfindungsgemäße Verfahren geeignete Phosphinoxide sind solche der Formel (VI) 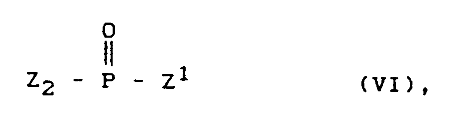
worin
Z und Z¹ die für Formel (V) genannte Bedeutung haben.

Geeignete Phosphinoxide sind beispielsweise Triphenylphosphinoxid, Butyl-di-phenylphosphinoxid, Octodecyl-di-phenylphosphinoxid, Benzyl-di-phenylphosphinoxid, Tris-p-tolyl-phosphinoxid, Tris-(p-chlorphenyl)-phosphinoxid und Phenyl-naphthyl-benzylphosphinoxid.

Die Zugabe der Katalysatoren erfolgt in bekannter Weise entweder vor oder während oder nach der Phosgenierung.

Geeignete Reduktionsmittel sind beispielsweise Natriumsulfit oder Natriumborhydrid. Die Reduktionsmittel werden in Mengen von 0,25-2 Mol-%, bezogen auf Mole Diphenole, eingesetzt.

In dem erfindungsgemäßen Verfahren können anstelle von Phosgen auch COBr₂ sowie Bishalogenformiate der Diphenole eingesetzt werden, beispielsweise die Bischlorformiate von 2,2-Bis-(4-hydroxyphenyl)-propan oder von 2,2-Bis-(4-hydroxy-3,5-dimethylphenyl)-propan

Es können auch Bishalogenformiate von aromatischen Oligocarbonaten eingesetzt werden.

Die Menge an Phosgen, bezogen auf phenolisches OH, die zur Durchführung des erfindungsgemäßen Verfahrens erforderlich ist, kann bei der Synthese von aromatischen Polycarbonaten zwischen 100-200 Mol-% vorzugsweise 110-150 Mol-% liegen.

Entsprechendes gilt bei Einsatz von Bishalogenformiaten.

Das erfindungsgemäße Verfahren führt in der Regel zu einem heterogenen Gemisch, kann aber in einem normalen Rührkessel durchmischt werden oder aber auch auf Knetern, wie sie z. B. im Kautschukbereich üblich sind. Die Aufarbeitung des Polycarbonats Beispiel nach Abtrennen der flüssigen Phase durch Auflösen dieser Polykondensate in leicht entfernbaren Lösungsmitteln, durch anschließende übliche Waschvorgänge und durch übliche Isolierung erfolgen.

Die Aufarbeitung der Polykondensate kann aber auch nach Abrennung der organischen und der anorganischen Phase durch direkte Wäsche der in gequollenem Zustand vorliegenden Reaktionsprodukte mit Säuren, wie beispielsweise Phosphorsäure oder Salzsäure, und Wasser erfolgen, was vorzugsweise auf einem Kneter durchgeführt wird. Anschließend erfolgt Trocknung der so gewaschenen Produkte. Ferner kann die organische Phase gegebenenfalls durch eine Wasserdampfdestillation entfernt werden. Die nach dem erfindungsgemäßen Verfahren erhältlichen thermoplastischen aromatischen Polycarbonate können mittlere Gewichtsmittelmolekulargewichte von 8000 bis 50 000 haben. (Gemessen durch Gelpermeationschromatographie).

Sie können in üblicher Weise stabilisiert, eingefärbt, gefüllt, pigmentiert, flammgeschützt oder mit anderen Polymeren modifiziert werden.

Die technische Brauchbarkeit der nach dem erfindungsgemäßen Verfahren erhältlichen thermoplastischen Polycarbonate ist bekannt, sie kann beispielsweise im Elektrosektor oder im Automobilsektor erfolgen.

### Beispiel 1

22,8 g (0,1 Mol) Bisphenol A werden zusammen mit 400 ml Wasser, 20 g (0,5 Mol) Natriumhydroxid, 125 ml Tolulol, 125 ml i-Octan und 0,5 Mol-% Triphenylphosphin (131 mg) bei 20°C vorgelegt und 0,15 Mol (14,85 g) Phosgen unter Rühren eingeleitet. Anschließend wird 1 h bei 20°C gerührt.

Zur Aufarbeitung wird mit Wasser verdünnt und mit verdünnter Phosphorsäure angesäuert. Das Polymer wird abgesaugt, neutral gewaschen und bei 80°C im Vakuum getrocknet.
Ausbeute: 22,7 g / ηrel = 1.497

### Beispiel 2

Wie Beispiel 1 jedoch werden 75 ml Toluol und 75 ml i-Octan verwendet und die Reaktion bei 10°C durchgeführt.
Ausbeute: 25,1 g / ηrel = 1.358

## Patentansprüche

1. Verfahren zur Herstellung von aromatischen Polycarbonaten nach dem bekannten Zweiphasengrenzflächenverfahren in Gegenwart von wäßriger und von organischer Phase durch Umsetzung von Diphenolen mit Phosgen in Gegenwart von Katalysatoren, gegebenenfalls unter Mitverwendung von monofunktionellen Kettenabbrechern und gegebenenfalls unter Mitverwendung von dreifunktionellen oder mehr als dreifunktionellen Verzweigern, gegebenenfalls in Anwesenheit von Reduktionsmitteln, wobei als organische Phase eine Mischung aus 5 bis 95 Gew.-% an aromatischen Kohlenwasserstoffen mit 95 bis 5 Gew.-% an Alkanen und/oder an Cycloalkanen eingesetzt wird,
dadurch gekennzeichnet, daß als Katalysatoren, Phosphine oder Phosphinoxide verwendet werden.

## Claims

1. A process for the production of aromatic polycarbonates by the known two-phase interfacial method in the presence of aqueous and organic phase by reaction of diphenols with phosgene in the presence of catalysts, optionally using monofunctional chain terminators and optionally using trifunctional or more than trifunctional branching agents, optionally in the presence of reducing agents, a mixture of 5 to 95% by weight of aromatic hydrocarbons with 95 to 5% by weight of alkanes and/or cycloalkanes being used as the organic phase, characterized in that phosphines or phosphine oxides are used as the catalysts.

## Revendications

1. Procédé de préparation de polycarbonates aromatiques selon le procédé interfacial à deux phases connu, en présence d'une phase aqueuse et d'une phase organique, par réaction de diphénols avec du phosgène en présence de catalyseurs, éventuellement avec des agents de terminaison de chaîne monofonctionnels et éventuellement avec des agents ramifiants trifonctionnels ou de fonctionnalité supérieure à trois, éventuellement en présence d'agents réducteurs, dans lequel on utilise comme phase organique un mélange de 5 à 95 % en masse d'hydrocarbures aromatiques et de 95 à 5 % en masse d'alcanes et/ou de cycloalcanes, caractérisé en ce que en l'on utilise comme catalyseurs des phosphines ou des oxydes de phosphines.
